# EUROPEAN PATENT APPLICATION

(11) **EP 4 622 340 A1**
(43) Date of publication of application: **24.09.2025**
(21) Application number: 22965556.8
(22) Date of filing: 18.11.2022
(51) Int. Cl.: H04W 36/00, H04W 52/02

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2022/132795
(87) International publication number: WO 2024/103375

(57) **Abstract**

Provided in the embodiments of the present disclosure are an information processing method and apparatus, and a communication device and a storage medium. The information processing method is executed by a UE, and comprises: reporting capability information of a UE, wherein the capability information is used for indicating the capability of the UE supporting RRM measurement enhancement.

## Description

### TECHNICAL FIELD

The present disclosure relates to, but is not limited to, the field of wireless communication technology, and in particular to an information processing method and apparatus, a communication device, and a storage medium.

### BACKGROUND

In order to support mobility performance of user equipment (UE) in scenarios such as High Speed Train (HST), Radio Resource Management (RRM) enhancement in the scenarios such as HST is studied in related art. However, if it is desired to study the RRM enhancement in the scenarios such as HST, it is necessary to obtain support by the related UE's capability.

### SUMMARY

Embodiments of the present disclosure provide an information processing method and apparatus, a communication device, and a storage medium.

According to a first aspect of the embodiments of the present disclosure, there is provided an information processing method, which is performed by a UE and includes:

reporting capability information of a UE, where the capability information is configured to indicate capability of RRM measurement enhancement supported by the UE.

In some embodiments, the capability information is configured to indicate the capability of RRM measurement enhancement supported by the UE in a HST scenario.

In some embodiments, the capability information is configured to indicate one of the following indications:
capability of whether to support HST Carrier Aggregation (CA) enhancement;
capability of whether to support HST inter-frequency measurement enhancement; or
capability of whether to support HST inter-system measurement enhancement.

In some embodiments, reporting the capability information of the UE includes:
sending a first Radio Resource Control (RRC) message, where the first RRC message includes the capability information.

In some embodiments, the method includes: receiving configuration information, the configuration information being configured to indicate configuration of RRM measurement enhancement of the UE.

In some embodiments, receiving the configuration information includes at least one of the following:
receiving a second RRC message, where the second RRC message includes the configuration information, and the UE is in a connected state; or
receiving a broadcast message, where the broadcast message includes the configuration information, and the UE is in an idle state or an inactive state.
In some embodiments, the method includes determining whether to perform RRM measurement enhancement based on the capability information and/or the configuration information.

In some embodiments, determining whether to perform RRM measurement enhancement based on the capability information and/or the configuration information includes at least one of the following:
determining to perform HST CA enhancement based on the capability information indicating the capability of supporting the HST CA enhancement by the UE and/or the configuration information indicating that the UE is configured with the HST CA enhancement;
determining not to perform HST CA enhancement based on the capability information indicating the capability of not supporting the HST CA enhancement by the UE and/or the configuration information indicating that the UE is not configured with the HST CA enhancement;
determining to perform HST inter-frequency measurement enhancement based on the capability information indicating the capability of supporting the HST inter-frequency measurement enhancement by the UE and/or the configuration information indicating that the UE is configured with the capability of HST inter-frequency measurement enhancement;
determining not to perform HST inter-frequency measurement enhancement based on the capability information indicating the capability of not supporting the HST inter-frequency measurement enhancement by the UE and/or the configuration information indicating that the UE is not configured with the capability of the HST inter-frequency measurement enhancement;
determining to perform HST inter-system measurement enhancement based on the capability information indicating the capability of supporting the HST inter-system measurement enhancement by the UE and/or the configuration information indicating that the UE is configured with the capability of the HST inter-system measurement enhancement; or
determining not to perform HST inter-system measurement enhancement based on the capability information indicating the capability of not supporting the HST inter-system measurement enhancement by the UE and/or the configuration information indicating that the UE is not configured with the capability of the HST inter-system measurement enhancement.

In some embodiments, the RRM measurement enhancement include:
a first parameter associated with the RMM measurement is a second value; where the second value is smaller than a first value, and the first value is a numerical value of the first parameter associated with the RRM measurement in a case where the UE performs non-RRM measurement enhancement.

In some embodiments, the first parameter includes at least one of the following:
a Primary Synchronization Signal/Secondary Synchronization Signal (PSS/SSS) detection cycle;
a Synchronization Signal Block (SSB) measurement cycle;
an SSB index acquisition delay; or
the number of receiving beam sweepings of the UE.

In some embodiments, the method includes at least one of the following:
determining that the first parameter associated with the RRM measurement is the second value according to a protocol; or
determining that the first parameter associated with the RRM is the second value according to indication information sent by a network device, where the indication information is configured to indicate that the first parameter is the second value.

In some embodiments, performing RRM measurement enhancement includes: determining the number of receiving beam sweepings of the UE in the RRM measurement according to a protocol agreement or indication information sent by a network device.

In some embodiments, the UE is a Customer Premise Equipment (CPE) type UE.

According to a second aspect of the embodiments of the present disclosure, there is provided an information processing method, which is performed by a network device and includes:
receiving capability information of a UE, where the capability information is configured to indicate capability of Radio Resource Management (RRM) measurement enhancement supported by the UE.

In some embodiments, the capability information is configured to indicate the capability of RRM measurement enhancement supported by the UE in a HST scenario.

In some embodiments, the capability information is configured to indicate one of the following indications:
capability of whether to support HST CA enhancement;
capability of whether to support HST inter-frequency measurement enhancement; or
capability of whether to support HST inter-system measurement enhancement.

In some embodiments, receiving the capability information of the UE includes:
receiving a first Radio Resource Control (RRC) message, where the first RRC message includes the capability information.

In some embodiments, the method includes: sending configuration information, where the configuration information is configured to indicate configuration of RRM measurement enhancement of the UE.

In some embodiments, sending the configuration information includes:
sending a second RRC message to the UE, where the second RRC message includes the configuration information; or
sending a broadcast message, where the broadcast message includes the configuration information.

In some embodiments, the configuration information is configured to indicate at least one of the following:
the UE is configured with HST CA enhancement;
the UE is not configured with HST CA enhancement;
the UE is configured with HST inter-frequency measurement enhancement;
the UE is not configured with HST inter-frequency measurement enhancement;
the UE is configured with HST inter-system measurement enhancement; or
the UE is not configured with HST inter-system measurement enhancement.

In some embodiments, the UE is a Customer Premise Equipment (CPE) type UE.

According to a third aspect of the embodiments of the present disclosure, there is provided an information processing apparatus, including:
a first sending module, configured to report capability information of a UE, where the capability information is configured to indicate capability of RRM measurement enhancement supported by the UE.

In some embodiments, the capability information is configured to indicate the capability of RRM measurement enhancement supported by the UE in a HST scenario.

In some embodiments, the capability information is configured to indicate one of the following indications:
capability of whether to support HST CA enhancement;
capability of whether to support HST inter-frequency measurement enhancement; or
capability of whether to support HST inter-system measurement enhancement.

In some embodiments, the first sending module is configured to send a first RRC message, where the first RRC message includes the capability information.

In some embodiments, the apparatus includes: a first receiving module configured to receive configuration information, where the configuration information is configured to indicate configuration of RRM measurement enhancement of the UE.

In some embodiments, the first receiving module is configured to receive a second RRC message, where the second RRC message includes the configuration information, and the UE is in a connected state; and/or
the first receiving module is configured to receive a broadcast message, where the broadcast message includes the configuration information, and the UE is in an idle state or an inactive state.

In some embodiments, the apparatus includes: a processing module configured to determine whether to perform RRM measurement enhancement based on the capability information and/or the configuration information.

In some embodiments, the processing module is configured to perform at least one of the following:
determining to perform HST CA enhancement based on the capability information indicating the capability of supporting the HST CA enhancement by the UE and/or the configuration information indicating that the UE is configured with the HST CA enhancement;
determining not to perform HST CA enhancement based on the capability information indicating the capability of not supporting the HST CA enhancement by the UE and/or the configuration information indicating that the UE is not configured with the HST CA enhancement;
determining to perform HST inter-frequency measurement enhancement based on the capability information indicating the capability of supporting the HST inter-frequency measurement enhancement by the UE and/or the configuration information indicating that the UE is configured with the capability of HST inter-frequency measurement enhancement;
determining not to perform HST inter-frequency measurement enhancement based on the capability information indicating the capability of not supporting the HST inter-frequency measurement enhancement by the UE and/or the configuration information indicating that the UE is not configured with the capability of the HST inter-frequency measurement enhancement;
determining to perform HST inter-system measurement enhancement based on the capability information indicating the capability of supporting the HST inter-system measurement enhancement by the UE and/or the configuration information indicating that the UE is configured with the capability of the HST inter-system measurement enhancement; or
determining not to perform HST inter-system measurement enhancement based on the capability information indicating the capability of not supporting the HST inter-system measurement enhancement by the UE and/or the configuration information indicating that the UE is not configured with the capability of the HST inter-system measurement enhancement.

In some embodiments, a first parameter associated with the RRM measurement is a second value, the second value is smaller than a first value, and the first value is a numerical value of the first parameter associated with the RRM measurement in a case where the UE performs non-RRM measurement enhancement.

In some embodiments, the first parameter includes at least one of the following:
a PSS/SSS testing cycle;
an SSB measurement cycle;
an SSB index acquisition delay; or
the number of receiving beam sweepings of the UE.

In some embodiments, the processing module is configured to determine, according to a protocol agreement, that the first parameter associated with the RRM measurement is a second value; and/or
the processing module is configured to determine, according to indication information sent by a network device, that the first parameter associated with the RRM measurement is the second value, where the indication information is configured to indicate that the first parameter is the second value.

In some embodiments, the processing module is configured to determine the number of receiving beam sweepings of the UE in the RRM measurement according to a protocol agreement or indication information sent by the network device.

In some embodiments, the UE is a CPE type UE.

According to a fourth aspect of the embodiments of the present disclosure, there is provided an information processing apparatus, including:
a second receiving module, configured to receive capability information of a UE, where the capability information is configured to indicate capability of Radio Resource Management (RRM) measurement enhancement supported by the UE.

In some embodiments, the capability information is configured to indicate the capability of RRM measurement enhancement supported by the UE in a HST scenario.

In some embodiments, the capability information is configured to indicate one of the following indications:
capability of whether to support HST CA enhancement;
capability of whether to support HST inter-frequency measurement enhancement; or
capability of whether to support HST inter-system measurement enhancement.

In some embodiments, the second receiving module is configured to receive a first radio resource control (RRC) message, where the first RRC message includes the capability information.

In some embodiments, the apparatus includes a second sending module configured to send configuration information, where the configuration information is configured to indicate configuration of RRM measurement enhancement of the UE.

In some embodiments, the second sending module is configured to send a second RRC message to the UE, where the second RRC message includes the configuration information; and/or
the second sending module is configured to send a broadcast message, where the broadcast message includes the configuration information.

In some embodiments, the configuration information is configured to indicate at least one of the following:
the UE is configured with HST CA enhancement;
the UE is not configured with HST CA enhancement;
the UE is configured with HST inter-frequency measurement enhancement;
the UE is not configured with HST inter-frequency measurement enhancement;
the UE is configured with HST inter-system measurement enhancement; or
the UE is not configured with HST inter-system measurement enhancement.

In some embodiments, the UE is a Customer Premise Equipment (CPE) type UE.

According to a fifth aspect of the present disclosure, a communication device is provided, the communication device including:
a processor; and
a memory configured to store instructions executable by the processor;
where the processor is configured to implement the information processing method in any of the embodiments of the present disclosure when running the executable instructions.

According to a sixth aspect of the present disclosure, a computer storage medium is provided, the computer storage medium stores a computer executable program, and the executable program, when being executed by a processor, implements the information processing method in any of the embodiments of the present disclosure.

The technical solutions provided by the embodiments of the present disclosure may have the following beneficial effects.

In the embodiments of the present disclosure, the UE reports the UE capability information, and the capability information is used to indicate the RRM measurement enhancement supported by the UE, so that the network side can be aware of the RRM measurement enhancement supported by the UE.

When the capability information reported by the UE can be used to indicate the capability of the RRM measurement enhancement supported by the UE in the HST scenario, the network side can also be aware of the RRM measurement enhancement supported by the UE in the High Speed Train (HST) scenarios, thereby facilitating the network side to configure the UE with the configuration of RRM measurement enhancement in the High Speed Train scenarios, and further facilitating the UE to determine whether to perform the RRM measurement enhancement in the High Speed Train scenarios.

It should be understood that the foregoing general description and the following detailed description are illustrative and explanatory only and are not restrictive of the embodiments of the present disclosure.

### BRIEF DESCRIPTION OF THE DRAWINGS

FIG. 1 is a schematic structural diagram of a wireless communication system according to an illustrative embodiment.
FIG. 2 is a schematic diagram showing an information processing method according to an illustrative embodiment.
FIG. 3 is a schematic diagram showing an information processing method according to an illustrative embodiment.
FIG. 4 is a schematic diagram showing an information processing method according to an illustrative embodiment.
FIG. 5 is a schematic diagram showing an information processing method according to an illustrative embodiment.
FIG. 6 is a schematic diagram showing an information processing apparatus according to an illustrative embodiment.
FIG. 7 is a schematic diagram showing an information processing apparatus according to an illustrative embodiment.
FIG. 8 is a block diagram showing a UE according to an illustrative embodiment.
FIG. 9 is a block diagram showing a base station according to an illustrative embodiment.
FIG. 10 is a schematic diagram showing a network architecture of a 5G system according to an illustrative embodiment.

### DETAILED DESCRIPTION

Illustrative embodiments will be described in detail herein, examples of which are shown in the accompanying drawings. When the following description refers to the drawings, the same numbers in different drawings represent the same or similar elements unless otherwise indicated. The implementations described in the following illustrative embodiments do not represent all implementations consistent with the embodiments of the present disclosure. Instead, they are merely examples of devices and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates otherwise. It should also be understood that the term "and/or" used herein refers to and includes any or all possible combinations of one or more associated items listed.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining".

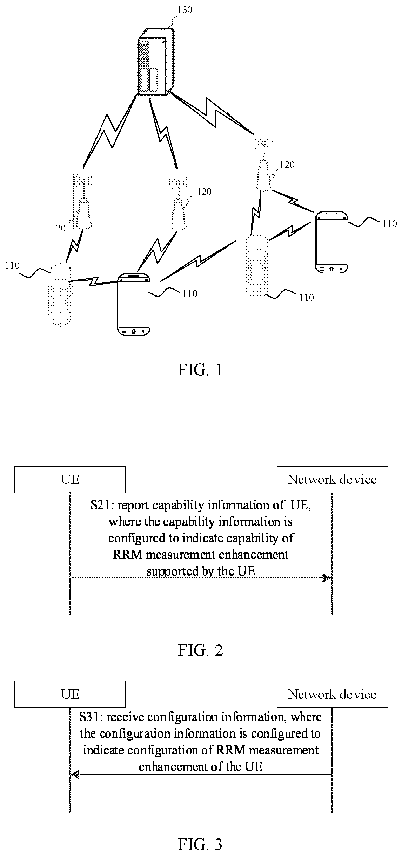

Please refer to FIG. 1, which shows a schematic structural diagram of a wireless communication system provided by an embodiment of the present disclosure.

As shown in FIG. 1, the wireless communication system may include one or more user equipments 110 and one or more access network devices 120. The wireless communication system may be a fourth generation mobile communication technology (4G) system, also known as a long term evolution (LTE) system; or the wireless communication system may be a 5G system, also known as a new air interface system or a 5G NR system. Alternatively, the wireless communication system may be a next generation system of the 5G system, etc.

The user equipment 110 can be a device that provides voice and/or data connectivity to the user. The user equipment 110 can communicate with one or more core networks via a radio access network (RAN). The user equipment 110 can be an Internet of Things user equipment, such as a sensor device, a mobile phone (or called a "cellular" phone), and a computer with an Internet of Things user equipment. For example, it can be a fixed, portable, pocket-sized, handheld, computer-built-in or vehicle-mounted device. For example, it can be a station (STA), a subscriber unit, a subscriber station, a mobile station, a mobile, a remote station, an access point, a remote user device, an access terminal, a user terminal, a user agent, a user device, or a user equipment. Alternatively, the user equipment 110 can also be a device of an unmanned aerial vehicle. Alternatively, the user equipment 110 can also be a vehicle-mounted device, for example, it can be a driving computer with wireless communication function, or a wireless user device connected to an external driving computer. Alternatively, the user equipment 110 may also be a roadside device, for example, a street lamp, a signal lamp or other roadside device with a wireless communication function.

The access network device 120 may be a network-side device in a wireless communication system. The access network device 120 may be an evolved base station (eNB) used in a 4G system. Alternatively, the access network device 120 may also be a base station (gNB) using a central distributed architecture in a 5G system. Alternatively, the access network device 120 may also be an access network in a 5G system, which may be referred to as a New Generation-Radio Access Network (NG-RAN). When the access network device 120 adopts a central distributed architecture, it generally includes a central unit (CU) and at least two distributed units (DU). The central unit is provided with protocol stacks of a packet data convergence protocol (PDCP) layer, a radio link layer control protocol (RLC) layer, and a media access control (MAC) layer; the distributed unit is provided with a physical (PHY) layer protocol stack. The specific implementation of the access network device 120 is not limited in embodiments of the present disclosure.

Wireless connection can be established between the access network device 120 and the user equipment 110 via a wireless air interface. In different implementations, the wireless air interface is a wireless air interface based on the fourth generation mobile communication network technology (4G) standard; or the wireless air interface is a wireless air interface based on the fifth generation mobile communication network technology (5G) standard, for example, the wireless air interface is a new air interface; or the wireless air interface may also be a wireless air interface based on the next generation mobile communication network technology standard of 5G.

In some embodiments, an End to End (E2E) connection may also be established between the user devices 110, for example in scenarios such as vehicle to vehicle (V2V) communication, vehicle to infrastructure (V2I) communication, and vehicle to pedestrian (V2P) communication in vehicle to everything (V2X) communications.

For example, the user equipment may be considered as a terminal device in the following embodiments.

In some embodiments, the wireless communication system may further include a core network device 130.

One or more access network devices 120 are respectively connected to the core network device 130. The core network device 130 may be a core network device in a wireless communication system, for example, the core network device 130 may be a Mobility Management Entity (MME) in an Evolved Packet Core (EPC). Alternatively, the core network device may also be other core network devices, such as a Serving GateWay (SGW), a Public Data Network GateWay (PGW), a Policy And Charging Rules Function (PCRF) or a Home Subscriber Server (HSS); or the core network device may also be a core network device in 5G; for example, it may be a Policy Control Function (PCF), a Session Management Function (SMF) or the like. The implementation form of the core network device 130 is not limited in the embodiment of the present disclosure.

In order to facilitate understanding by those skilled in the art, the embodiments of the present disclosure enumerate multiple implementations to clearly illustrate the technical solutions of the embodiments of the present disclosure. Of course, those skilled in the art can understand that the multiple embodiments provided by the embodiments of the present disclosure can be performed separately, or can be performed together in combination with the methods of other embodiments in the embodiments of the present disclosure, or can be performed with some methods in other related technologies separately or in combination, which is not limited in the embodiments of the present disclosure.

As shown in FIG. 2, an embodiment of the present disclosure provides an information processing method, which is performed by a UE and includes:
in step S21, reporting capability information of the UE, where the capability information is configured to indicate capability of RRM measurement enhancement supported by the UE.

By way of example, the UE may be various mobile terminals or fixed terminals. For example, the UE may be, but is not limited to, a mobile phone, a computer, a server, a wearable device, a game console, a multimedia device, various sensors, or the like.

In an embodiment, the UE is a Customer Premise Equipment (CPE) type UE.

In an embodiment, the UE is a UE of any power class or a UE of a predetermined power class. For example, the UE may be a UE of power class 1, power class 2, power class 6, or power class X, where X is a positive integer.

In an embodiment, reporting the capability information of the UE in step S21 includes: reporting the capability information of the UE to a network device.

By way of example, the network device may be a logical node or function flexibly deployed in a communication network. The network device may be an access network device and/or a core network device. The access network device may be a base station, for example, the base station may be but is not limited to a 2G base station, a 3G base station, a 4G base station, a 5G base station or other evolved base stations. The core network device may be but is not limited to an AMF, a NEF, or the like. If the UE reports the capability information of the UE to the core network device, it may be that the UE reports the capability information of the UE to the base station and the base station sends the capability information of the UE to the core network device.

By way of example, the capability information is configured to indicate the capability of supporting RRM measurement enhancement, or is configured to indicate the capability of not supporting RRM measurement enhancement.

In an embodiment of the present disclosure, it provides an information processing method, which is performed by a UE and includes: reporting capability information of the UE, where the capability information is configured to indicate the capability of RRM measurement enhancement supported by the UE in an HST scenario.

Of course, in some other embodiments, the capability information is configured to indicate the capability of RRM measurement enhancement supported by the UE in high speed scenarios.

In an embodiment, the RRM measurement enhancement includes, but is not limited to, at least one of the following: CA enhancement, inter-frequency measurement enhancement, and inter-system measurement enhancement.

In an embodiment, the RRM measurement enhancement includes, but is not limited to, at least one of the following: HST CA enhancement, HST inter-frequency measurement enhancement, and HST inter-system measurement enhancement.

In some embodiments, the capability information is configured to indicate one of the following indications:
capability of whether to support HST CA enhancement;
capability of whether to support HST inter-frequency measurement enhancement; or
capability of whether to support HST inter-system measurement enhancement.

In an embodiment of the present disclosure, it provides an information processing method, which is performed by a UE and includes: reporting capability information of the UE, where the capability information is configured to indicate capability of RRM measurement enhancement supported by the UE in a predetermined frequency range in a HST scenario.

In an embodiment, the predetermined frequency range may be, but is not limited to, a Frequency range 2 (FR2).

In another embodiment, the predetermined frequency range may be but is not limited to a Frequency range 1 (FR1).

In some embodiments, the capability information is configured to indicate at least one of the following:
capability of whether to support FR2 HST CA enhancement;
capability of whether to support FR2 HST inter-frequency measurement enhancement; or
capability of whether to support FR2 HST inter-system measurement enhancement.

By way of example, if the capability information is a first value, it is used to indicate the capability of supporting the FR2 HST CA enhancement; or if the capability information is a second value, it is used to indicate the capability of not supporting the FR2 HST CA enhancement. And/or, if the capability information is a first value, it is used to indicate the capability of supporting the FR2 HST inter-frequency measurement enhancement; or if the capability information is a second value, it is used to indicate the capability of not supporting the FR2 HST inter-frequency measurement enhancement. And/or, if the capability information is a first value, it is used to indicate the capability of supporting theFR2 HST inter-system measurement enhancement; or if the capability information is a second value, it is used to indicate the capability of not supporting the FR2 HST inter-system measurement enhancement.

In the embodiment of the present disclosure, the UE reports the capability information of the UE, and the capability information is configured to indicate the RRM measurement enhancement supported by the UE, so that the network side can be aware of the RRM measurement enhancement supported by the UE.

If the capability information reported by the UE can be used to indicate the capability of RRM measurement enhancement supported by the UE in the HST scenario, the network side can be aware of the RRM measurement enhancement supported by the UE in the High Speed Train (HST) scenarios, which is beneficial for the network side to configure the RRM measurement enhancement configuration for the UE in the high speed train scenarios, and is further beneficial for the UE to determine whether to perform the RRM measurement enhancement in the high speed train scenarios.

In some embodiments, reporting the capability information of the UE in step S21 includes: sending a first RRC message, where the first RRC message includes the capability information.

In an embodiment of the present disclosure, it provides an information processing method, which is performed by a UE and includes: sending a first RRC message, where the first RRC message includes the capability information.

In an embodiment, sending the first RRC message includes: sending the first RRC message to a network device.

In an embodiment, the first RRC message may be an RRC message. For example, the first RRC message includes but is not limited to one of the following: an RRC establishment message, an RRC configuration message, an RRC reconfiguration message, and an RRC connection resume message.

In the embodiments of the present disclosure, the capability information of the UE may be reported through the first RRC message, so that two functions may be implemented through one RRC message, which could improve the utilization efficiency of the RRC message and reduce signaling overhead.

It should be noted that those skilled in the art can understand that the method provided in the embodiments of the present disclosure can be performed alone or together with some methods in the embodiments of the present disclosure or some methods in related art.

As shown in FIG. 3, an embodiment of the present disclosure provides an information processing method, which is performed by a UE and includes:
in step S31, receiving configuration information, where the configuration information is configured to indicate configuration of RRM measurement enhancement of the UE.

In some embodiments of the present disclosure, the capability information and the RRM measurement enhancement may be the capability information and the RRM measurement enhancement in the above embodiments, respectively.

In an embodiment, receiving the configuration information in step S31 includes: receiving the configuration information sent by a network device.

By way of example, the configuration of RRM measurement enhancement of the UE includes: configuring the RRM measurement enhancement for the UE, or not configuring the RRM measurement enhancement for the UE.

In an embodiment, the network device determines the configuration information based on the capability information of the UE.

By way of example, if the capability information is configured to indicate that the RRM measurement enhancement is supported, the configuration information is configured to indicate that RRM measurement enhancement is configured for the UE; or, if the capability information is configured to indicate that the RRM measurement enhancement is not supported, the configuration information is configured to indicate that RRM measurement enhancement is not configured for the UE.

By way of example, if the capability information is configured to indicate the capability of supporting HST inter-frequency measurement enhancement, the configuration information is configured to indicate that the HST inter-frequency measurement enhancement is configured for the UE; or if the capability information is configured to indicate the capability of not supporting HST inter-frequency measurement enhancement, the configuration information is configured to indicate that the HST inter-frequency measurement enhancement is not configured for the UE.

In some other embodiments, the configuration information is determined by the network device based on the capability information and network status information. By way of example, the network status information is configured to indicate situations such as network congestion.

By way of example, if the capability information is configured to indicate the capability of supporting RRM measurement enhancement and the network status information is configured to indicate network congestion, the configuration information is configured to indicate that RRM measurement enhancement is configured for the UE, or the configuration information may also be configured to indicate that RRM measurement enhancement is not configured for the UE.

In some other embodiments, the configuration information may not need to be determined based on the capability information of the UE, but may be determined directly by the network device.

In the embodiments of the present disclosure, the UE may receive the configuration information sent by the network device, so that the UE is aware of whether the network device has configured the RRM measurement enhancement for the UE, which facilitates the UE to determine whether to perform the RRM measurement enhancement based on the configuration information.

In some embodiments, receiving the configuration information in step S31 includes at least one of the following.

A second RRC message is received; where the second RRC message includes the configuration information.

In an embodiment, the network device may send the configuration information to the UE that is in a connected state via the second RRC message. In other words, the UE in the connected state may obtain the configuration information by receiving the second RRC message.

A broadcast message is received; where the broadcast message includes the configuration information, and the UE is in an idle state or an inactive state.

In another embodiment, the network device may send the configuration information to the UE that is in a non-connected state (e.g., in an idle state or an inactive state) by sending the broadcast message. In other words, the UE in the non-connected state (e.g., in an idle state or an inactive state) may obtain the configuration information by receiving the broadcast message.

In an embodiment of the present disclosure, if the configuration information is sent by being included in the second RRC message, the configuration information is configured to indicate the configuration of RRM measurement enhancement of the UE in the connected state; and/or, if the configuration information is sent by being included in the broadcast message, the configuration information is configured to indicate the configuration of RRM measurement enhancement of the UE in the idle state or inactive state.

In the embodiments of the present disclosure, the idle state UE may be an RRC idle state UE; the inactive state UE may be an RRC inactive state UE; and the connected state UE may be an RRC connected state UE.

An embodiment of the present disclosure provides an information processing method, which is performed by a UE, and includes: receiving a second RRC message; where the second RRC message includes configuration information. Here, the UE is in a connected state.

In an embodiment, the second RRC message may be any type of RRC message. For example, the second RRC message may be, but is not limited to, one of the following: an RRC connection message and an RRC configuration message.

An embodiment of the present disclosure provides an information processing method, which is performed by a UE, and includes: receiving a broadcast message; where the broadcast message includes configuration information. Here, the UE is in an inactive state or an idle state.

In an embodiment, the broadcast information may be, but is not limited to, any system message. For example, the broadcast information may be, but is not limited to, SIB 0, SIB 1, SIB 2, and SIB X.

In the embodiments of the present disclosure, the UE may obtain the configuration information by receiving the second RRC message, and the configuration information is configured to indicate the configuration of the RRM measurement enhancement of the UE in the connected state, so that the UE in the connected state is aware of the configuration of the RRM enhancement. And/or the UE may obtain the configuration information through the broadcast message, and the configuration information is configured to indicate the configuration of the RRM measurement enhancement of the UE in the inactive state or the idle state, so that the UE in the inactive state and/or the UE in the idle state is aware of the configuration of the RRM enhancement.

And, two functions can be implemented through one RRC message, which can improve utilization efficiency of the RRC and reduce signaling overhead; and/or two functions can be implemented through one broadcast message, which can improve utilization efficiency of the broadcast message and reduce signaling overhead.

It should be noted that those skilled in the art can understand that the method provided in the embodiments of the present disclosure can be performed alone or together with some methods in the embodiments of the present disclosure or some methods in related art.

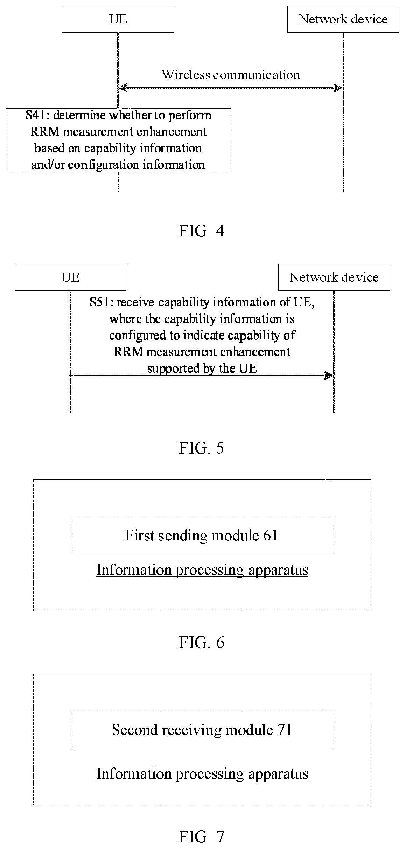

As shown in FIG. 4, an embodiment of the present disclosure provides an information processing method, which is performed by a UE and includes:
in step S41, determining whether to perform RRM measurement enhancement based on capability information and/or configuration information.

In some embodiments of the present disclosure, the capability information and the configuration information may be the capability information and the configuration information in the above embodiments, respectively; and the RRM measurement enhancement may be the RRM measurement enhancement in the above embodiments.

In some embodiments, step S41 includes at least one of the following:
determining to perform HST CA enhancement based on the capability information indicating the capability of supporting the HST CA enhancement by the UE and/or the configuration information indicating that the UE is configured with the HST CA enhancement;
determining not to perform HST CA enhancement based on the capability information indicating the capability of not supporting the HST CA enhancement by the UE and/or the configuration information indicating that the UE is not configured with the HST CA enhancement;
determining to perform HST inter-frequency measurement enhancement based on the capability information indicating the capability of supporting the HST inter-frequency measurement enhancement by the UE and/or the configuration information indicating that the UE is configured with the capability of HST inter-frequency measurement enhancement;
determining not to perform HST inter-frequency measurement enhancement based on the capability information indicating the capability of not supporting the HST inter-frequency measurement enhancement by the UE and/or the configuration information indicating that the UE is not configured with the capability of HST inter-frequency measurement enhancement;
determining to perform HST inter-system measurement enhancement based on the capability information indicating the capability of supporting the HST inter-system measurement enhancement and/or the configuration information indicating that the UE is configured with the capability of HST inter-system measurement enhancement; or
determining not to perform the HST inter-system measurement enhancement based on the capability information indicating the capability of not supporting the HST inter-system measurement enhancement and/or the configuration information indicating that the UE is not configured with the capability of HST inter-system measurement enhancement.

An embodiment of the present disclosure provides an information processing method, which is performed by a UE and includes one of the following:
determining to perform RRM measurement enhancement based on the capability information indicating that the UE supports the RRM measurement enhancement and/or the configuration information indicating that the UE is configured with the RRM measurement enhancement; or
determining to perform RRM measurement enhancement based on the capability information indicating that the UE does not support the RRM measurement enhancement and/or the configuration information indicating that the UE is not configured with the RRM measurement enhancement.

An embodiment of the present disclosure provides an information processing method, which is performed by a UE and includes at least one of the following:
determining to perform HST CA enhancement based on the capability information indicating the capability of supporting the HST CA enhancement by the UE and/or the configuration information indicating that the UE is configured with the HST CA enhancement;
determining not to perform HST CA enhancement based on the capability information indicating the capability of not supporting the HST CA enhancement by the UE and/or the configuration information indicating that the UE is not configured with the HST CA enhancement;
determining to perform HST inter-frequency measurement enhancement based on the capability information indicating the capability of supporting the HST inter-frequency measurement enhancement by the UE and/or the configuration information indicating that the UE is configured with the capability of HST inter-frequency measurement enhancement;
determining not to perform HST inter-frequency measurement enhancement based on the capability information indicating the capability of not supporting the HST inter-frequency measurement enhancement by the UE and/or the configuration information indicating that the UE is not configured with the capability of HST inter-frequency measurement enhancement;
determining to perform HST inter-system measurement enhancement based on the capability information indicating the capability of supporting the HST inter-system measurement enhancement by the UE and/or the configuration information indicating that the UE is configured with the capability of HST inter-system measurement enhancement; or
determining not to perform HST inter-system measurement enhancement based on the capability information indicating the capability of not supporting the HST inter-system measurement enhancement by the UE and/or the configuration information indicating that the UE is not configured with the capability of HST inter-system measurement enhancement.

In an embodiment, the HST CA enhancement may be FR2 HST CA enhancement; and/or, the HST inter-frequency measurement enhancement may be FR2 HST inter-frequency measurement enhancement; and/or, the HST inter-system measurement enhancement may be FR2 HST inter-system measurement enhancement.

In an embodiment, performing RRM measurement enhancement may be performing RRM measurement enhancement of a secondary cell (SCell) or performing RRM measurement enhancement of a primary secondary cell (PScell). Of course, in other embodiments, performing RRM measurement enhancement may be performing RRM measurement enhancement of a primary cell (Pcell).

In the embodiments of the present disclosure, the UE may determine whether to perform RRM measurement enhancement based on the capability information of the UE and/or the configuration information sent by the network device, thereby accurately implementing RRM measurement enhancement, which is beneficial to the communication quality of the communication network, etc.

In some embodiments, performing RRM measurement enhancement in step S41 includes:
determining to change a first parameter associated with the RRM measurement from a first value to a second value, where the first value is greater than the second value.

An embodiment of the present disclosure provides an information processing method, which is performed by a UE, and includes: determining to change a first parameter associated with the RRM measurement from a first value to a second value, where the first value is greater than the second value.

In some embodiments, the first parameter includes, but is not limited to, at least one of the following:
a PSS/SSS testing cycle;
an SSB measurement cycle;
an SSB index acquisition delay; or
the number of receiving beam sweepings of the UE.

By way of example, if the first parameter is the PSS/SSS detection cycle, SSB measurement cycle, or SSB index acquisition delay, the first value is a first delay and the second value is a second delay. And/or, if the first parameter is the number of receiving beam sweepings of the UE, the first value is a first number and the second value is a second number.

By way of example, the first delay and the second delay can be any time, as long as the first delay is greater than the second delay. For example, the first delay is 50 ms, the second delay is 40 ms, or the like.

As such, in the embodiments of the present disclosure, the RRM measurement enhancement can be implemented by reducing the first parameter associated with the RRM measurement.

By way of example, changing the first parameter associated with the RRM measurement (for example, including a PSS/SSS detection cycle, an SSB measurement cycle, or an SSB index acquisition delay) from the first delay to the second delay can be implemented by changing the number of the receiving beam sweepings of the UE in the RRM measurement from a first number to a second number, where the first number is greater than the second number.

By way of example, changing the number of the receiving beam sweepings of the UE in the RRM measurement from the first number to the second number includes: changing the number of the receiving beam sweepings of the UE in the RRM measurement from the first number to the second number according to a protocol agreement; or changing the number of the receiving beam sweepings of the UE in the RRM measurement from the first number to the second number according to indication information sent by a network, where the indication information is configured to indicate to change the number of the receiving beam sweepings of the UE from the first number to the second number; or, changing, according to indication information sent by a network, the number of the receiving beam sweepings of the UE in the RRM measurement from the first number to the second number as indicated by the indication information, where the indication information is configured to indicate a number for the number of the receiving beam sweepings of the UE. The indication information may be first indication information.

In some embodiments, performing RRM measurement enhancement includes: determining the number of the receiving beam sweepings of the UE in the RRM measurement according to a protocol agreement or indication information sent by a network device. The indication information may be third indication information.

An embodiment of the present disclosure provides an information processing method, which is performed by a UE, and includes: determining the number of receiving beam sweepings of the UE in the RRM measurement according to a protocol agreement or indication information sent by a network device.

By way of example, the UE may determine the number of receiving beam sweepings of the UE in the RRM measurement as a predetermined number according to the protocol agreement; or the UE may determine the number of receiving beam sweepings of the UE in the RRM measurement as a predetermined number according to the indication information, where the indication information is configured to indicate that the number of receiving beam sweepings of the UE in the RRM measurement is the predetermined number. The predetermined number may be, but is not limited to, 2, 4, 6, 8, or the like. As such, the number of receiving beam sweepings of the UE in the RRM measurement may be directly determined according to the protocol agreement or the indication by the network.

By way of example, changing the first parameter associated with the RRM measurement from the first value to the second value includes: changing the first parameter associated with the RRM measurement from the first value to the second value according to a protocol agreement; or, changing the first parameter associated with the RRM measurement from the first value to the second value according to indication information sent by the network, where the indication information is configured to indicate to change the first parameter associated with the RRM measurement from the first value to the second value. The indication information may be second indication information.

In some embodiments, determining to change the first parameter associated with the RRM measurement from the first value to the second value includes at least one of the following:
changing the number of receiving beam sweepings of the UE in the RRM measurement from a first number to a second number according to a protocol agreement or indication information sent by a network device, where the first number is greater than the second number; or
changing a PSS/SSS detection cycle, SSB measurement cycle or SSB index acquisition delay associated with the RRM measurement from a first delay to a second delay according to a protocol agreement or indication information sent by a network device.

An embodiment of the present disclosure provides an information processing method, which is performed by a UE and includes at least one of the following:
changing the number of receiving beam sweepings of the UE in the RRM measurement from a first number to a second number according to a protocol agreement or indication information sent by a network device, where the first number is greater than the second number; or
changing the PSS/SSS detection cycle, SSB measurement cycle or SSB index acquisition delay associated with the RRM measurement from a first delay to a second delay according to a protocol agreement or indication information sent by a network device.

In an embodiment, the protocol is a wireless communication protocol.

By way of example, the wireless communication protocol requires that the number of receiving beam sweepings of the UE corresponding to the PSS/SSS detection cycle is 8; if the number of receiving beam sweepings of the UE is reduced from 8 to 6, the delay of the PSS/SSS detection cycle can be reduced by reducing the number of the receiving beam sweepings.

By way of example, the UE receives the indication information sent by the network device, and the indication information is configured to indicate to change the number of receiving beam sweepings of the UE corresponding to the SSB measurement cycle from 6 to 4; based on the indication information, the UE determines to reduce the number of receiving beam sweepings of the UE from 6 to 4, and thus the delay of the SSB measurement cycle can be reduced by reducing the number of the receiving beam sweepings.

By way of example, if the wireless communication protocol requires that the PSS/SSS measurement cycle be reduced from a first delay to a second delay, the delay of the PSS/SSS measurement cycle may be directly reduced.

By way of example, the UE receives the indication information sent by the network device, and the indication information is configured to indicate to reduce the SSB measurement cycle from a first delay to a second delay; based on the indication information, the UE determines to reduce the SSB measurement cycle from the first delay to the second delay.

In this way, the value of the first parameter can be reduced through the protocol agreement or the indication of the network device, thereby achieving the purpose of reducing the first parameter.

In some embodiments, the RRM measurement enhancement includes that a first parameter associated with the RRM measurement is a second value, where the second value is smaller than the first value.

In the embodiments of the present disclosure, the second value is a value of the first parameter associated with the RRM measurement when the UE performs RRM measurement enhancement; the second value is a value of the first parameter associated with the RRM measurement when the UE performs non-RRM measurement enhancement. That the UE performs non-RRM measurement enhancement may be that the UE does not perform the RRM measurement enhancement.

In an embodiment of the present disclosure, the first parameter may be, but is not limited to: a PSS/SSS detection cycle, an SSB measurement cycle, an SSB index acquisition delay, and the number of receiving beam sweepings of the UE.

An embodiment of the present disclosure provides an information processing method, which is performed by a UE and includes: determining, according to a protocol agreement, that a first parameter associated with RRM measurement is a second value.

An embodiment of the present disclosure provides an information processing method, which is performed by a UE, and includes: determining, according to indication information sent by a network device, that a first parameter associated with RRM measurement is a second value, where the indication information is configured to indicate that the first parameter is the second value.

In an embodiment of the present disclosure, the RRM measurement enhancement can be implemented by reducing the value of the first parameter (such as a PSS/SSS detection cycle, an SSB measurement cycle, an SSB index acquisition delay and/or the number of receiving beam sweepings of the UE) from the first value to the second value.

Furthermore, in the embodiments of the present disclosure, the RRM measurement enhancement can be implemented in a variety of ways through the protocol agreement or indication by the network device, which can be adapted to more application scenarios.

It should be noted that those skilled in the art can understand that the method provided in the embodiments of the present disclosure can be performed alone or together with some methods in the embodiments of the present disclosure or some methods in related art.

In the following, an information processing method is performed by a network device, and is similar to the information processing method performed by the UE as described above; and for technical details not disclosed in the embodiments of the information processing method performed by the network device, reference can be made to the description of the examples of the information processing method performed by the UE, which will not be detailed here.

As shown in FIG. 5, an embodiment of the present disclosure provides an information processing method, which is performed by a network device and includes:
in step S51, receiving capability information of a UE, where the capability information is configured to indicate capability of RRM measurement enhancement supported by the UE.

In an embodiment, in step S51, the capability information of the UE sent by the UE is received.

By way of example, the UE may be a CPE type UE; or the UE may be a UE in a connected state and/or a UE in an idle state and/or a UE in an inactive state; or the UE may be a UE of any power class.

In some embodiments of the present disclosure, the capability information may be the capability information in the above embodiments; and the RRM measurement enhancement may be the RRM measurement enhancement in the above embodiments.

By way of example, the capability information is configured to indicate the capability of RRM measurement enhancement supported by the UE in a HST scenario.

By way of example, the capability information is configured to indicate the capability of RRM measurement enhancement supported by the UE in a high-speed scenario.

By way of example, the capability information is configured to indicate one of the following indications:
capability of whether to support HST CA enhancement;
capability of whether to support HST inter-frequency measurement enhancement; or
capability of whether to support HST inter-system measurement enhancement.

By way of example, the capability information is configured to indicate the capability of RRM measurement enhancement supported by the UE in a predetermined frequency range in the HST scenario.

By way of example, the capability information is configured to indicate at least one of the following:
capability of whether to support FR2 HST CA enhancement;
capability of whether to support FR2 HST inter-frequency measurement enhancement; or
capability of whether to support FR2 HST inter-system measurement enhancement.

As such, the network device receives the capability information of the UE reported by the UE, and the capability information is configured to indicate the RRM measurement enhancement supported by the UE, so that the network device can be aware of the RRM measurement enhancement supported by the UE.

And, if the capability information reported by the UE can be configured to indicate the capability of RRM measurement enhancement supported by the UE in the HST scenario, the network device can be aware of the RRM measurement enhancement supported by the UE in the high speed train (HST) scenario, thereby facilitating the network device to configure the UE with the configuration of the RRM measurement enhancement in the high speed train scenario and/or facilitating the UE to determine whether to perform the RRM measurement enhancement in the high speed train scenario.

In some embodiments, receiving the capability information of the UE in step S51 includes: receiving a first RRC message, where the first RRC message includes the capability information.

An embodiment of the present disclosure provides an information processing method, which is performed by a network device, and includes: receiving a first RRC message, where the first RRC message includes capability information.

By way of example, receiving the first RRC message includes: receiving the first RRC message sent by a UE.

In some embodiments of the present disclosure, the first RRC message may be the first RRC message in the above embodiments. By way of example, the first RRC message may be an RRC message. For example, the first RRC message includes but is not limited to one of the following: an RRC establishment message, an RRC configuration message, an RRC reconfiguration message, and an RRC connection resume message.

In this way, the capability information of the UE can be reported through the first RRC message, and two functions can be implemented through one RRC message; as such, the utilization efficiency of the RRC message can be improved and the signaling overhead can be reduced.

It should be noted that those skilled in the art can understand that the method provided in the embodiments of the present disclosure can be performed alone or together with some methods in the embodiments of the present disclosure or some methods in related art.

An embodiment of the present disclosure provides an information processing method, which is performed by a network device and includes: sending configuration information, where the configuration information is configured to indicate configuration of RRM measurement enhancement of a UE.

In some embodiments of the present disclosure, the configuration information and the RRM measurement enhancement may be the configuration information and the RRM measurement enhancement in the above embodiments, respectively.

By way of example, the configuration of the RRM measurement enhancement of the UE includes: configuring the RRM measurement enhancement for the UE, or not configuring the RRM measurement enhancement for the UE.

By way of example, the configuration information is configured to indicate at least one of the following:
the UE is configured with HST CA enhancement;
the UE is not configured with HST CA enhancement;
the UE is configured with HST inter-frequency measurement enhancement;
the UE is not configured with HST inter-frequency measurement enhancement;
the UE is configured with HST inter-system measurement enhancement; or
the UE is not configured with HST inter-system measurement enhancement.

By way of example, the HST CA enhancement may be FR2 HST CA enhancement; the HST inter-frequency measurement enhancement may be FR2 HST inter-frequency measurement enhancement; and/or the HST inter-system measurement enhancement may be FR2 HST inter-system measurement enhancement.

An embodiment of the present disclosure provides an information processing method, which is performed by a network device and includes: determining configuration information.

In an embodiment, determining the configuration information includes:
determining the configuration information based on capability information of the UE;
   or,
determining the configuration information based on the capability information of the UE and network status information.

Of course, in other embodiments, the network device may also directly determine the configuration information, or determine the configuration information according to a protocol agreement, or determine the configuration information according to historical experience information, etc.

In some embodiments, sending the configuration information includes:
sending a second RRC message to the UE, where the second RRC message includes the configuration information; and/or,
sending a broadcast message, where the broadcast message includes the configuration information.

An embodiment of the present disclosure provides an information processing method, which is performed by a network device and includes:
sending a second RRC message to the UE, where the second RRC message includes configuration information; and/or,
sending a broadcast message is sent, where the broadcast message includes configuration information.

Here, the network device sends the second RRC message, the UE in a connected state can receive the second RRC message and obtain configuration information based on the second RRC message. Alternatively, the network device sends the broadcast message, the UE in an idle state or an inactive state can receive the broadcast message and obtain the configuration information based on the broadcast message.

Of course, in other embodiments, the network device may send the second RRC message to the UE and/or send the broadcast message, the second RRC message includes the configuration information to indicate the configuration of RRM measurement enhancement of the UE in the connected state; and/or the broadcast message includes the configuration information to indicate the configuration of RRM measurement enhancement of the UE in the idle state or the inactive state.

In this way, the configuration information can be sent to the UE by the network device so that the UE is aware of the configured RRM measurement enhancement. In addition, UEs in different states can be notified respectively through the RRC message or the broadcast message so that the UEs in different states can obtain the configuration information.

For the above implementations, reference can be made to the description of with respect to the UE side for details, which will not be repeated here.

It should be noted that those skilled in the art can understand that the method provided in the embodiments of the present disclosure can be performed alone or together with some methods in the embodiments of the present disclosure or some methods in related art.

In order to further explain any embodiment of the present disclosure, a specific embodiment is provided below.

An embodiment of the present disclosure provides an information processing method, which is performed by a communication device, the communication device includes a network device and a UE, and the information processing method includes the following steps.

In step S61, the UE reports capability information of the UE, where the capability information is configured to indicate capability of RRM measurement enhancement supported by the UE in a HST scenario.

By way of example, the UE is a CEP type UE. Or the UE is a UE of any power class; for example, the UE is a power class 6 UE.

By way of example, the UE sends a first RRC message to the network device, the first RRC message includes the capability information, the capability information is configured to indicate at least one of the following: capability of whether FR2 HST CA enhancement is supported, capability of whether FR2 HST inter-frequency measurement is supported, and capability of whether FR2 HST inter-system measurement is supported.

By way of example, it can be described through the following code:

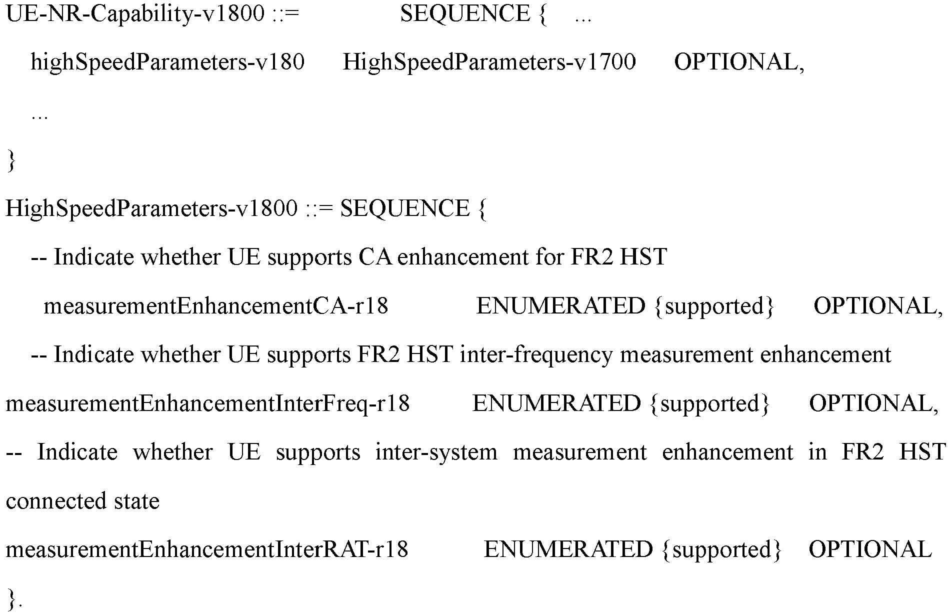

In step S62, the network device sends configuration information to the UE, where the configuration information is configured to indicate configuration of RRM measurement enhancement of the UE.

By way of example, the network device sends configuration information to the UE according to the capability information of the UE. By way of example, the network device sends a second RRC message to the UE, the second message includes the configuration information to indicate the configuration of the RRM measurement enhancement of the UE in the connected state. And/or, the network device sends a broadcast message to the UE, the broadcast message includes the configuration information to indicate the configuration of the RRM measurement enhancement of the UE in the idle state or the inactive state.

By way of example, it can be described through the following code: 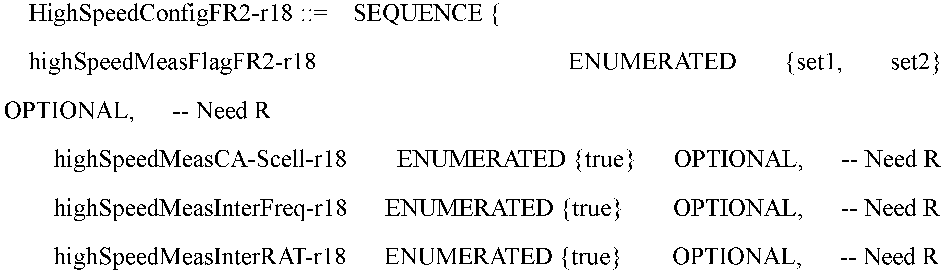 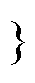 //The network configures whether the UE is required to perform enhanced HST function through an enumeration manner. If not configured, the UE does not need to perform the enhanced HST measurement.

In step S63, the UE determines whether to perform RRM measurement enhancement according to the capability information and the configuration information.

By way of example, the UE determines to perform FR2 HST CA enhancement based on the capability information indicating the capability of supporting the FR2 HST CA enhancement and the configuration information indicating that the UE is configured with the FR2 HST CA enhancement.

By way of example, the UE may determine to perform RRM measurement enhancement of a Scell. By way of example, in an application scenario, since the requirement for Scell measurement enhancement is consistent with the requirement for the enhanced intra-frequency measurement in the existing wireless communication protocol, there is no update to the wireless communication protocol in the enhancement method, but the execution of the RRM measurement enhancement of the SCell can be controlled from the signaling perspective.

By way of example, the UE determines to perform FR2 HST inter-frequency measurement enhancement based on the capability information indicating that the FR2 HST inter-frequency measurement enhancement is supported and the configuration information indicating that the UE is configured with the FR2 HST inter-frequency measurement enhancement.

By way of example, the UE determines to perform FR2 HST inter-frequency measurement enhancement based on the capability information indicating the FR2 HST inter-system measurement enhancement is supported and the configuration information indicating that the UE is configured with the FR2 HST inter-system measurement enhancement.

By way of example, the UE may implement RRM measurement enhancement by reducing a first parameter, the first parameter may include but is not limited to at least one of the following: a PSS/SSS detection cycle, an SSB measurement cycle, and an SSB index acquisition delay. For example, the first parameter is reduced from a first delay to a second delay. The UE may reduce the first parameter in at least one of the following two manners:

Manner 1: the UE reduces the PSS/SSS detection cycle, SSB measurement cycle and/or SSB index acquisition delay by reducing the number of receiving beam sweepings (RX beam sweepings) of the UE. For example, the PSS/SSS detection cycle is represented by "T_{PSS/SSS_sync_intra}"; for the UE of the capability of supporting the RRM measurement enhancement, the number of the RX beam sweepings can be configured to be reduced from a first number to a second number through protocol agreement or indication by the network device; the second number can be 2, 4, 6, 8, or the like. For example, the following Table 1 describes the situation in which the number of RX beam sweepings for not discontinuous reception (DRX) cycle, short discontinuous reception cycle (for example, DRX cycle being less than or equal to 320ms) and long DRX cycle (for example, DRX cycle being greater than 320ms) is reduced so as to reduce the delay of the first parameter; where M_{pss/sss_sync_w/o_gaps} is the number of RX beam sweepings.

**Table 1**

| DRX Cycle | T_{PSS/SSS_sync_intra} |
|---|---|
| Not a DRX cycle (No DRX) | max(600ms, ceil(M_{pss/sss_sync_w/o_gaps} x Kₚ x K_{layer1_measurement}) x SMTC period)^{Note1} x CSSFᵢₙₜᵣₐ |
| DRX cycle less than or equal to 320ms | max(600ms, ceil(1.5 x M_{pss/sss_sync_w/o_gaps} x Kₚ x K_{layer1_measurement}) x max(SMTC period,DRX cycle)) x CSSFᵢₙₜᵣₐ |
| DRX cycle greater than 320ms | cell(M_{pss/sss_sync_w/o_gaps} x Kₚ x K_{layer1_measurement}) x DRX cycle x CSSFᵢₙₜᵣₐ |

It is understood that each of the elements in the above Table 1 exists independently. These elements are illustratively listed in the same table, but it does not mean that all elements in the table must exist at the same time as shown in the table. The value of each of the elements is independent of the value of any other element in Table 1. Therefore, those skilled in the art can understand that the value of each of the elements in Table 1 is an independent embodiment.

Method 2: the UE reduces the PSS/SSS detection cycle, SSB measurement cycle and/or SSB index acquisition delay according to protocol agreement or indication sent by the network device. For example, the UE reduces the PSS/SSS detection cycle, SSB measurement cycle and/or SSB index acquisition delay from a first delay to a second delay.

For the above implementations, reference can be made to the description with respect to the UE side and/or the network device side, which will not be described in detail here.

In the embodiments of the present disclosure, the UE can report the capability information of the UE to the network device, so that the network device is aware of the RRM measurement enhancement supported by the UE in the HST scenario, which is beneficial for the network device to configure the RRM measurement enhancement for the UE. In this way, the UE can accurately determine whether to perform the RRM measurement enhancement according to the RRM measurement enhancement supported by the UE and/or the configured RRM measurement enhancement.

In the embodiments of the present disclosure, the RRM measurement enhancement can be implemented through a variety of methods, such as by reducing the PSS/SSS detection cycle, SSB measurement cycle and/or SSB index acquisition delay, as well as reducing the number of RX beam sweepings of the UE, etc., which can be adapted to more application scenarios of RRM measurement enhancement.

It should be noted that those skilled in the art can understand that the method provided in the embodiments of the present disclosure can be performed alone or together with some methods in the embodiments of the present disclosure or some methods in related art.

As shown in FIG. 6, an embodiment of the present disclosure provides an information processing apparatus, including:
a first sending module 61, configured to report capability information of a UE, where the capability information is configured to indicate capability of RRM measurement enhancement supported by the UE.

The information processing apparatus provided in the embodiment of the present disclosure may be a UE.

In some embodiments, the UE is a CPE type UE or the UE is a UE of any power class or a UE of a predetermined power class.

In some other embodiments, the UE may be a connected state UE, an idle state UE and/or an inactive state UE.

In some embodiments, the capability information is configured to indicate the capability of the RRM measurement enhancement supported by the UE in the HST scenario.

In some embodiments, the capability information is configured to indicate one of the following indications:
capability of whether to support HST CA enhancement;
capability of whether to support HST inter-frequency measurement enhancement; or
capability of whether to support HST inter-system measurement enhancement.

In some embodiments, the capability information is configured to indicate one of the following indications:
capability of whether to support FR2 HST CA enhancement;
capability of whether to support FR2 HST inter-frequency measurement enhancement; or
capability of whether to support FR2 HST inter-system measurement enhancement.

An embodiment of the present disclosure provides an information processing apparatus, including: a first sending module 61, configured to send a first RRC message, where the first RRC message includes capability information.

An embodiment of the present disclosure provides an information processing apparatus, including: a first receiving module, configured to receive configuration information, where the configuration information is configured to indicate configuration of RRM measurement enhancement of the UE.

An embodiment of the present disclosure provides an information processing apparatus, including: a first receiving module, configured to receive a second RRC message, where the second RRC message includes the configuration information, and the UE is in a connected state;
and/or, the first receiving module is configured to receive a broadcast message, where the broadcast message includes the configuration information, and the UE is in an idle state or an inactive state.

An embodiment of the present disclosure provides an information processing apparatus, including: a processing module, configured to determine whether to perform RRM measurement enhancement based on the capability information and/or the configuration information.

An embodiment of the present disclosure provides an information processing apparatus, including: a processing module, configured to perform at least one of the following:
determining to perform HST CA enhancement based on the capability information indicating the UE capability of supporting HST CA enhancement and/or the configuration information indicating that the UE is configured with HST CA enhancement;
determining not to perform HST CA enhancement based on the capability information indicating the UE capability of not supporting HST CA enhancement and/or the configuration information indicating that the UE is not configured with HST CA enhancement;
determining to perform HST inter-frequency measurement enhancement based on the capability information indicating the UE capability of supporting HST inter-frequency measurement enhancement and/or the configuration information indicating that the UE is configured with the capability of HST inter-frequency measurement enhancement;
determining not to perform HST inter-frequency measurement enhancement based on the capability information indicating the UE capability of not supporting HST inter-frequency measurement enhancement and/or the configuration information indicating that the UE is not configured with the capability of HST inter-frequency measurement enhancement;
determining to perform HST inter-system measurement enhancement based on the capability information indicating the UE capability of supporting HST inter-system measurement enhancement and/or the configuration information indicating that the UE is configured with the capability of HST inter-system measurement enhancement;
determining not to perform the HST inter-system measurement enhancement based on the capability information indicating the UE capability of not supporting HST inter-system measurement enhancement and/or the configuration information indicating that the UE is not configured with the capability of HST inter-system enhancement.

In some embodiments, the HST CA enhancement may be FR2 HST CA enhancement; the HST inter-system measurement enhancement may be FR2 HST inter-system enhancement; and/or the HST inter-system measurement enhancement may be FR2 HST inter-system measurement enhancement.

An embodiment of the present disclosure provides an information processing apparatus, including: a processing module, configured to determine the number of receiving beam sweepings of the UE in the RRM measurement according to protocol agreement or indication information sent by a network device.

An embodiment of the present disclosure provides an information processing apparatus, including that a first parameter associated with the RRM measurement is a second value; where the second value is smaller than a first value, and the first value is a numerical value of the first parameter associated with RRM measurement when the UE performs non-RRM measurement enhancement.

In some embodiments, the first parameter includes at least one of the following:
a PSS/SSS testing cycle;
an SSB measurement cycle;
an SSB index acquisition delay; or
the number of receiving beam sweepings of the UE.

An embodiment of the present disclosure provides an information processing apparatus, including: a processing module, configured to determine, according to a protocol agreement, that a first parameter associated with the RRM measurement is a second value;
and/or, the processing module is configured to determine, according to indication information sent by a network device, that the first parameter associated with the RRM measurement is the second value.

As shown in FIG. 7, an embodiment of the present disclosure provides an information processing apparatus, including:
a second receiving module 71, configured to receive capability information of a UE, where the capability information is configured to indicate capability of Radio Resource Management (RRM) measurement enhancement supported by the UE.

The information processing apparatus provided by the embodiments of the present disclosure may be a network device.

In some embodiments, the UE is a CPE type UE or the UE is a UE of any power class.

In some other embodiments, the UE may be a connected state UE, an idle state UE and/or an inactive state UE.

In some embodiments, the capability information is configured to indicate the capability of RRM measurement enhancement supported by the UE in a HST scenario.

In some embodiments, the capability information is configured to indicate one of the following indications:
capability of whether to support HST CA enhancement;
capability of whether to support HST inter-frequency measurement enhancement; or
capability of whether to support HST inter-system measurement enhancement.

In some embodiments, the capability information is configured to indicate one of the following indications:
capability of whether to support FR2 HST CA enhancement;
capability of whether to support FR2 HST inter-frequency measurement enhancement; or
capability of whether to support FR2 HST inter-system measurement enhancement.

An embodiment of the present disclosure provides an information processing apparatus, including: a second receiving module 71, configured to receive a first Radio Resource Control (RRC) message, where the first RRC message includes the capability information.

An embodiment of the present disclosure provides an information processing apparatus, including: a second sending module, configured to send configuration information, where the configuration information is configured to indicate configuration of RRM measurement enhancement of the UE.

An embodiment of the present disclosure provides an information processing apparatus, including: a second sending module, configured to send a second RRC message to the UE, where the second RRC message includes the configuration information;
and/or, the second sending module is configured to send a broadcast message, where the broadcast message includes the configuration information.

In some embodiments, the configuration information is configured to indicate at least one of the following:
the UE is configured with HST CA enhancement;
the UE is not configured with HST CA enhancement;
the UE is configured with HST inter-frequency measurement enhancement;
the UE is not configured with HST inter-frequency measurement enhancement;
the UE is configured with HST inter-system measurement enhancement; or
the UE is not configured with HST inter-system measurement enhancement.

In some embodiments, the HST CA enhancement may be FR2 HST CA enhancement; the HST inter-system measurement enhancement may be FR2 HST inter-system enhancement; and/or the HST inter-system measurement enhancement may be FR2 HST inter-system measurement enhancement.

It should be noted that those skilled in the art can understand that the apparatus provided in the embodiments of the present disclosure can be performed alone or together with some apparatuses in the embodiments of the present disclosure or some apparatuses in related art.

Regarding the apparatus in the above embodiments, the specific manner in which the modules perform operations has been described in detail in the method embodiments, which will not be repeated here.

An embodiment of the present disclosure provides a communication device, including:
a processor; and
a memory configured to store instructions executable by the processor;
where the processor is configured to implement the information processing method in any embodiment of the present disclosure when running the executable instructions.

In an embodiment, the communication device may include but is not limited to at least one of: a network device and a UE.

The processor may include various types of storage media, which are non-transitory computer storage media that can continue to memorize information stored thereon after the user device is powered down.

The processor may be connected to the memory via a bus or the like, and may be configured to read an executable program stored on the memory, for example, at least one of the methods shown in FIG. 2 to FIG. 5.

An embodiment of the present disclosure also provides a computer storage medium storing a computer executable program, and the executable program, when being executed by a processor, implements the information processing method in any embodiment of the present disclosure, for example, at least one of the methods shown in FIG. 2 to FIG. 5.

For the apparatus or storage medium in the above embodiments, the specific manner in which the modules perform operations has been described in detail in the method embodiments, and will not be repeated here.

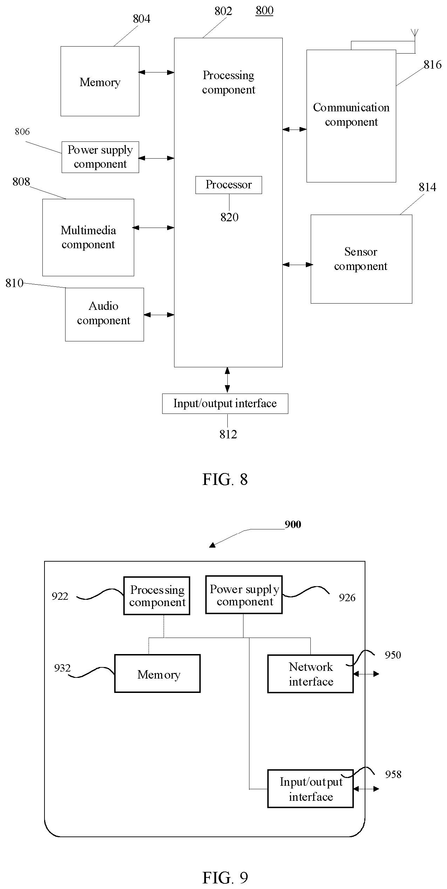

FIG. 8 is a block diagram showing a user equipment (UE) 800 according to an illustrative embodiment. For example, the user equipment 800 may be a mobile phone, a computer, a digital broadcast user device, a messaging device, a game console, a tablet device, a medical device, a fitness device, a personal digital assistant, or the like.

Referring to FIG. 8, the user equipment 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the user equipment 800, such as operations associated with display, phone calls, data communications, camera operations, and recording operations. The processing component 802 may include one or more processors 820 to execute instructions to complete all or part of the steps of the above methods. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support operations on the user equipment 800. Examples of such data include instructions for any application or method operating on the user equipment 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power to the various components of the user equipment 800. The power supply component 806 may include a power supply management system, one or more power supplies, and other components associated with generating, managing, and distributing power to the user equipment 800.

The multimedia component 808 includes a screen that provides an output interface between the user equipment 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the user equipment 800 is in an operating mode, such as a shooting mode or a video mode, the front camera and/or the rear camera may receive external multimedia data. The front camera and rear camera may each be a fixed optical lens system or have a focal length and optical zoom capability.

The audio component 810 is configured to output and/or input audio signals. For example, the audio component 810 includes a microphone (MIC), and when the user equipment 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules, such as a keyboard, a click wheel, buttons, etc. These buttons may include but are not limited to: a home button, a volume button, a start button, and a lock button.

The sensor component 814 includes one or more sensors for providing various aspects of status assessment for the user equipment 800. For example, the sensor component 814 can detect the open/closed state of the sensor component 800, the relative positioning of the components, such as the display and keypad of the user equipment 800, and the sensor component 814 can also detect the position change of the user equipment 800 or a component of the user equipment 800, the presence or absence of contact between the user and the user equipment 800, the orientation or acceleration/deceleration of the user equipment 800, and the temperature change of the user equipment 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the user equipment 800 and other devices. The user equipment 800 can access a wireless network based on a communication standard, such as WiFi, 4G or 5G, or a combination thereof. In an illustrative embodiment, the communication component 816 receives a broadcast signal or broadcast-related information from an external broadcast management system via a broadcast channel. In an illustrative embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the user equipment 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as a memory 804 including instructions, and the instructions can be executed by the processor 820 of the user equipment 800 to complete the above method. For example, the non-transitory computer-readable storage medium can be a ROM, a random access memory (RAM), a CD-ROM, a magnetic tape, a floppy disk, an optical data storage device, etc.

As shown in FIG. 9, an embodiment of the present disclosure shows a structure of a base station. For example, the base station 900 may be provided as a network-side device. Referring to FIG. 9, the base station 900 includes a processing component 922 which further includes one or more processors, and a memory resource represented by a memory 932 for storing instructions executable by the processing component 922, such as an application. The application stored in the memory 932 may include one or more modules, each of which corresponds to a set of instructions. In addition, the processing component 922 is configured to execute instructions to perform any method in the aforementioned methods applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM or the like.

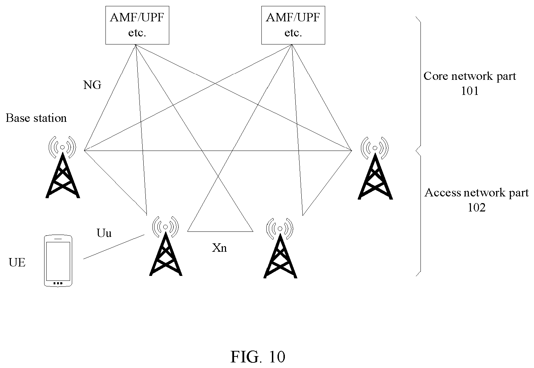

As shown in FIG. 10, an embodiment of the present disclosure shows a network architecture of a 5G system, including a core network part 101 and an access network part 102. The core network part includes a core network device, which mainly includes communication nodes such as an Access and Mobility Management Function (AMF), a User Plane Function (UPF), a Network Exposure Function (NEF), User Data Repository (UDR) and a Session Management Function (SMF). The access network part includes a base station(s). AMF is mainly responsible for various functions including registration management, connection management, access management, mobility management, and functions related to security and access management and authorization. UPF is mainly responsible for various functions related to data plane anchor, PDU session point connecting to data network, message routing and forwarding, traffic usage reporting and legal monitoring. NEF is mainly responsible for functions related to providing a secure way to expose services and capabilities of 3GPP network functions to AF and providing a secure way for AF to provide information to 3GPP network. UDR is mainly responsible for storing important process data in the wireless communication process. SMF is mainly responsible for functions related to session management, charging and QoS policy control, legal monitoring, charging data collection and downlink data notification.

Those skilled in the art can readily conceive of other implementations of the present disclosure after considering the specification and practicing the disclosure disclosed herein. The present disclosure is intended to cover any variations, uses or adaptations of the present disclosure that follow the general principles of the present disclosure and include common knowledge or conventional technical measure in the art that are not disclosed in the present disclosure. The description and examples are to be considered illustrative only, and the true scope and spirit of the present disclosure are indicated by the following claims.

It should be understood that the present disclosure is not limited to the precise structures that have been described above and shown in the drawings, and that various modifications and changes may be made without departing from the scope thereof. The scope of the present disclosure is limited only by the appended claims.

## Claims

1. An information processing method, wherein the method is performed by a user equipment (UE) and comprises:
reporting capability information of the UE, wherein the capability information is configured to indicate capability of Radio Resource Management (RRM) measurement enhancement supported by the UE.

2. The method according to claim 1, wherein the capability information is configured to indicate the capability of RRM measurement enhancement supported by the UE in a High Speed Train (HST) scenario.

3. The method according to claim 1 or 2, wherein the capability information is configured to indicate one of the following indications:
capability of whether to support HST CA enhancement;
capability of whether to support HST inter-frequency measurement enhancement; or
capability of whether to support HST inter-system measurement enhancement.

4. The method according to any one of claims 1 to 3, wherein reporting the capability information of the UE comprises:
sending a first Radio Resource Control (RRC) message, wherein the first RRC message comprises the capability information.

5. The method according to any one of claims 1 to 4, wherein the method comprises:
receiving configuration information, wherein the configuration information is configured to indicate configuration of the RRM measurement enhancement of the UE.

6. The method according to claim 5, wherein receiving the configuration information comprises at least one of the following:
receiving a second RRC message, wherein the second RRC message comprises the configuration information, and the UE is in a connected state; or
receiving a broadcast message, wherein the broadcast message comprises the configuration information, and the UE is in an idle state or an inactive state.

7. The method according to claim 5 or 6, wherein the method comprises:
determining whether to perform the RRM measurement enhancement based on the capability information and/or the configuration information.

8. The method according to claim 7, wherein determining whether to perform the RRM measurement enhancement based on the capability information and/or the configuration information comprises at least one of the following:
determining to perform HST CA enhancement based on the capability information indicating the capability of supporting the HST CA enhancement by the UE and/or the configuration information indicating that the UE is configured with the HST CA enhancement;
determining not to perform HST CA enhancement based on the capability information indicating the capability of not supporting the HST CA enhancement by the UE and/or the configuration information indicating that the UE is not configured with the HST CA enhancement;
determining to perform HST inter-frequency measurement enhancement based on the capability information indicating the capability of supporting the HST inter-frequency measurement enhancement by the UE and/or the configuration information indicating that the UE is configured with the capability of the HST inter-frequency measurement enhancement;
determining not to perform HST inter-frequency measurement enhancement based on the capability information indicating the capability of not supporting the HST inter-frequency measurement enhancement by the UE and/or the configuration information indicating that the UE is not configured with the capability of the HST inter-frequency measurement enhancement;
determining to perform HST inter-system measurement enhancement based on the capability information indicating the capability of supporting the HST inter-system measurement enhancement by the UE and/or the configuration information indicating that the UE is configured with the capability of the HST inter-system measurement enhancement; or
determining not to perform HST inter-system measurement enhancement based on the capability information indicating the capability of not supporting the HST inter-system measurement enhancement and/or the configuration information indicating that the UE is not configured with the capability of the HST inter-system measurement enhancement.

9. The method according to any one of claims 1 to 8, wherein the RRM measurement enhancement comprises that:
a first parameter associated with the RRM measurement is a second value, wherein the second value is smaller than a first value, and the first value is a numerical value of the first parameter associated with the RRM measurement in a case where the UE performs non-RRM measurement enhancement.

10. The method according to claim 9, wherein the first parameter comprises at least one of the following:
a PSS/SSS testing cycle;
an SSB measurement cycle;
an SSB index acquisition delay; or
the number of receiving beam sweepings of the UE.

11. The method according to claim 9 or 10, wherein the method comprises at least one of the following:
determining, according to a protocol agreement, that the first parameter associated with the RRM measurement is the second value; or
determining, according to indication information sent by a network device, that the first parameter associated with the RRM measurement is the second value, wherein the indication information is configured to indicate that the first parameter is the second value.

12. The method according to any one of claims 1 to 11, wherein,
the UE is a Customer Premise Equipment (CPE) type UE.

13. An information processing method, wherein the method is performed by a network device and comprises:
receiving capability information of a User Equipment (UE), wherein the capability information is configured to indicate capability of Radio Resource Management (RRM) measurement enhancement supported by the UE.

14. The method according to claim 13, wherein the capability information is configured to indicate the capability of RRM measurement enhancement supported by the UE in a High Speed Train (HST) scenario.

15. The method according to claim 13 or 14, wherein the capability information is configured to indicate one of the following indications:
capability of whether to support HST CA enhancement;
capability of whether to support HST inter-frequency measurement enhancement; or
capability of whether to support HST inter-system measurement enhancement.

16. The method according to any one of claims 13 to 15, wherein receiving the capability information of the UE comprises:
receiving a first Radio Resource Control (RRC) message, wherein the first RRC message comprises the capability information.

17. The method according to any one of claims 13 to 16, wherein the method comprises:
sending configuration information, wherein the configuration information is configured to indicate configuration of the RRM measurement enhancement of the UE.

18. The method according to claim 17, wherein sending the configuration information comprises at least one of the following:
sending a second RRC message to the UE, wherein the second RRC message comprises the configuration information; or
sending a broadcast message, wherein the broadcast message comprises the configuration information.

19. The method according to claim 17 or 18, wherein the configuration information is configured to indicate at least one of the following:
the UE is configured with HST CA enhancement;
the UE is not configured with the HST CA enhancement;
the UE is configured with HST inter-frequency measurement enhancement;
the UE is not configured with the HST inter-frequency measurement enhancement;
the UE is configured with HST inter-system measurement enhancement; or
the UE is not configured with the HST inter-system measurement enhancement.

20. The method according to any one of claims 13 to 19, wherein,
the UE is a Customer Premise Equipment (CPE) type UE.

21. An information processing apparatus, comprising:
a first sending module, configured to report capability information of a UE, wherein the capability information is configured to indicate capability of Radio Resource Management (RRM) measurement enhancement supported by the UE.

22. An information processing apparatus, comprising:
a second receiving module, configured to receive capability information of a User Equipment (UE), wherein the capability information is configured to indicate capability of Radio Resource Management (RRM) measurement enhancement supported by the UE.

23. A communication device, comprising:
a processor; and
a memory configured to store instructions executable by the processor;
wherein the processor is configured to implement the information processing method according to any one of claims 1 to 12 or claims 13 to 20 when running the executable instructions.

24. A computer storage medium, wherein the computer storage medium stores a computer executable program, and the executable program, when being executed by a processor, implements the information processing method according to any one of claims 1 to 12 or claims 13 to 20.
